# EUROPÄISCHE PATENTSCHRIFT

(11) **EP 0 957 290 B1**
(45) Veröffentlichungstag und Bekanntmachung des Hinweises auf die Patenterteilung: **15.06.2005**
(21) Anmeldenummer: 99108498.9
(22) Anmeldetag: 30.04.1999
(51) Int. Cl.: F16G 3/02, F16G 3/08

(54) **Verbindung zweier Enden eines Förderbandes**
Connection of both ends of a conveyor belt
Jonction des deux extrémités d'une bande transporteuse

(30) Priorität: 11.05.1998 DE 19820717
(43) Veröffentlichungstag der Anmeldung: 17.11.1999
(73) Patentinhaber: MATO Maschinen- und Metallwarenfabrik Curt Matthaei GmbH & Co KG, 63071 Offenbach (DE)
(72) Erfinder: Börner, Gerhard, 65203 Wiesbaden (DE); Herold, Wolfgang, 63075 Offenbach (DE)
(74) Vertreter: Quermann, Helmut, Dipl.-Ing.

(56) Entgegenhaltungen:
- DE-A- 4 235 759
- DE-B- 1 015 214
- DE-C- 826 723
- DE-C- 3 709 594
- FR-A- 1 115 251
- US-A- 2 516 779
- US-A- 3 010 168
- US-A- 3 141 346
- US-A- 5 348 782

## Beschreibung

Die Erfindung betrifft eine Verbindung zweier Enden eines Förderbandes mit Verbindungselementen, die mittels Befestigungselementen mit den Förderbandenden verbunden sind, wobei zumindest auf einer Seite des Förderbandes eine Abdeckung angeordnet ist, die die auf dieser Seite befindlichen Verbindungselemente abdeckt, sowie Haltemittel für die Abdeckung vorgesehen sind, die mit den Verbindungselementen zusammenwirken, wobei das jeweilige Verbindungselement U-förmig ausgebildet ist, und mit unterschiedlichen Förderbandenden verbundene Verbindungselemente im Bereich der U-förmigen Öse mittels eines Kupplungselementes verbunden sind, sowie die Verbindungselemente mittels separaten Befestigungselementen mit den Förderbandenden verbunden sind.

Eine Verbindung zweier Enden eines Förderbandes mit Verbindungselementen, die mittels Befestigungselementen mit den Förderbandenden verbunden sind, wobei zumindest auf einer Seite des Förderbandes eine Abdeckung angeordnet ist, die die auf dieser Seite befindlichen Verbindungselemente und die Befestigungselemente der Verbindungselemente abdeckt, sowie Haltemittel für die Abdeckung vorgesehen sind, die mit den Verbindungselementen zusammenwirken, ist aus der DE 37 09 554 C1 bekannt.
Dort ist die Abdeckung im Zwischenraum zwischen den beiden Enden des Förderbandes mit den Verbindungselementen verbunden. Die Folge ist, daß die Abdeckung in Förderrichtung vorlaufend und nachlaufend frei auskragend die Enden des Förderbandes abdeckt. Diese Abdeckung ist insbesondere elastisch, vorzugsweise federelastisch ausgebildet und besteht aus Stahl und/oder Kunststoff. Gemäß einer spezifischen Gestaltung durchsetzt bei der montierten Abdeckung ein Kupplungselement, das als Stab ausgebildet ist, die sich überlappenden, mit unterschiedlichen Förderbandenden verbundenen Verbindungselemente und das Haltemittel der Abdeckung. Die Abdeckung ist somit im Stab schwenkbar gelagert. Bei einer anderen spezifischen Gestaltung erfolgt die Befestigung der Abdeckung im Abstand zum Stab. Die Abdeckung weist im Abstand zum Stab Halteelemente auf, die mit Löchern versehen sind, welche Haltestäbe durchsetzen. Diese Haltestäbe hintergreifen die zugewandten Schenkel der Verbindungselemente.

Eine derartige Verbindung zweier Enden eines Förderbandes zeichnet sich nur durch eine unzureichende Haltbarkeit aus. Dies gilt insbesondere dann, wenn mittels des Förderbandes schwere, unregelmäßig geformte Materialien bzw. Gegenstände zu fördern sind, insbesondere Kohle, Erze usw.. Abgebrochene Teile der zu fördernden Materialien und/oder beim Gegeneinanderbewegen der Materialien entstehende kleine Partikel gelangen unter die Abdeckung, so daß diese gegen das Fördergut vorsteht. Es geht damit ein erhöhter Verschleiß der Abdeckung und letztendlich der Verbindungs- und Befestigungselemente einher. Es besteht die Gefahr, daß die Abdeckung einreißt und einzelne Verbindungselemente vorschnell brechen und das Fördergut damit nicht mehr sicher gefördert werden kann. Ist insbesondere eine Abstreifvorrichtung vorgesehen, die in den Weg des Fördergutes ragt und dieses vom Förderband ableitet, ist eine besonders ausgeprägte Relativbewegung zwischen Fördergut und Förderband, somit auch im Bereich der Abdeckung und der Verbindungsund Befestigungselemente, zu verzeichnen. Dies führt dazu, daß die Verbindung der Enden des Förderbandes einem noch höheren Verschleiß ausgesetzt ist. Eine Reparatur, somit das Anbringen neuer Verbindungselemente an den Gurtenden sowie das Anbringen einer neuen Abdeckung benötigt erhebliche Zeit, mit der Folge des Stillstandes des Förderbandes und reduzierter Wirtschaftlichkeit.

Beim Bewegen des Förderbandes über eine Umlenkrolle ist eine erhöhte Geräuschemission zu beachten, da die metallischen Verbindungs- und Befestigungselemente über die in aller Regel metallische Umlenkrolle geführt werden. Das auf dem Förderband geförderte Gut drückt hierbei infolge seines Gewichtes die Verbindungs- und Befestigungselemente mit erheblicher Kraft gegen die Umlenkrolle.

Aus der DE-PS 826 723 ist eine Schutzkappe für Transportband-Verbinder bekannt, die aus Kautschuk oder einem gleichwärtigen elastischen Werkstoff besteht. Die Schutzkappe durchdringt im Bereich zwischen den beiden Förderbandenden die Räume zwischen den Verbindungselementen und ist zu einem stabförmigen Einbauelement vereinigt. Die Schutzkappe erstreckt sich in Art von Wülsten geringfügig über das Förderbandniveau, bezogen auf deren Ober- und Unterseite.

Die Verbindung zweier Enden eines Förderbandes in Art einer Gelenkverbindung oder einer gelenkfreien Verbindung ist beispielsweise aus der DE 42 35 759 A1 bekannt. Dort ist das jeweilige Verbindungselement U-förmig ausgebildet, und es sind mit unterschiedlichen Förderbandenden verbundene Verbindungselemente im Bereich der U-förmigen Öse mittels eines Kupplungselementes verbunden, oder es weist das jeweilige Verbindungselement eine starre Platte auf.

Aus der US-A-3,010,168 ist eine Verbindung der eingangs genannten Art bekannt. Bei dieser dienen die Befestigungselemente allerdings nicht nur dem Befestigen der Verbindungselemente an den Förderbandenden, sondern sie haben gleichfalls auch die Funktion, die Abdeckung an den Verbindungselementen zu befestigen. Die Haltemittel entsprechen in diesem Fall somit den Befestigungsmitteln.

Es ist Aufgabe der vorliegenden Erfindung, eine Verbindung der eingangs genannten Art so weiter zu bilden, daß diese sich durch eine besonders lange Haltbarkeit auszeichnet. Ferner soll bei einer solchen Verbindung eine vorteilhafte Geräuschemission erreicht werden.

Gelöst wir die Aufgabe durch eine Verbindung mit den Merkmalen des Patentanspruchs 1.

Erfindungsgemäß ist damit vorgesehen, daß die Haltemittel für die Abdeckung unmittelbar mit den Verbindungselementen verbunden sind. Es werden somit beim Einwirken des Fördergutes auf die Abdeckung über diese keine Kräfte in Kupplungselemente oder dergleichen, die die miteinander kämmenden Verbindungselemente durchsetzen, eingeleitet, sondern es stellen die Haltemittel eine feste Verbindung zwischen der Abdeckung und den Verbildungselementen dar. Gemäß einer besonderen Gestaltung ist vorgesehen, daß das jeweilige Haltemittel mit dem Verbindungselement verschraubt oder durch dieses gesteckt ist, insbesondere in bzw. durch ein Loch im Schenkel, der für die Aufnahme des Befestigungselementes geeignet ist, eingeschraubt bzw. durchgesteckt ist. Grundsätzlich können als Haltemittel für die Abdeckung unterschiedlichste Bauteile verwendet werden, beispielsweise Nägel, Bolzen, Krampen. Als besonders vorteilhafte Befestigungsmittel werden allerdings Schrauben angesehen, insbesondere solche, die selbstschneidend ausgebildet sind. Um die Auflage einfach bezüglich der Förderbandenden und der Verbindungselemente positionieren zu können, sollte die Abdeckung mehrere Ausrichtbohrungen aufweisen, die mit Löchern in den Verbindungselementen fluchten. Die Ausrichtung erfolgt durch Einstecken eines Stiftes in die jeweilige Ausrichtbohrung und das dieser zugeordnete Loch des Verbindungselementes.

Die Abdeckung selbst kann unterschiedlich gestaltet sein. Da sie dem Verschleiß unterworfen ist, sollte sie zweckmäßig austauschbar sein. Dies ist besonders einfach und schnell durch Befestigen der Abdeckung mittels Schrauben möglich.

Im Sinne der Erfindung reicht es aus, daß die Abdeckung auf derjenigen Seite des Gurtes angeordnet ist, die dem Fördergut zugewandt ist. Eine besondere Weiterbildung der Erfindung sieht vor, daß die Abdeckung auch auf der dem Fördergut abgewandten Seite vorgesehen ist. Es ist damit ausgeschlossen, daß die metallischen Verbindungs- und Befestigungselemente im Bereich der Umlenkrollen diese kontaktieren. Statt dessen wird die Abdeckung geräuscharm um die Umlenkrolle geführt. Hiermit ist auch eine Verminderung des Verschleißes der Elemente verbunden.

Eine mögliche Gestaltung sieht vor, daß die Enden des Förderbandes eine reduzierte Stärke aufweisen und in dem so gebildeten Rücksprung des Förderbandes die Abdeckung angeordnet ist. Im Idealfall bildet die Oberfläche, die mit dem Fördergut in Kontakt gelangt, eine Ebene mit der Oberfläche des Förderbandes.

Ist dieses beispielsweise als einlagiger Textilfördergut mit oberer und unterer Deckplatte aus Gummi versehen, kann die obere Deckplatte zur Aufnahme der Abdeckung entfernt werden. Die Abdeckung kann beispielsweise in eine schwalbenschwanzförmige Querausnehmung des Förderbandes eingeschoben bzw. eingesteckt werden. Weisen die Enden des Förderbandes keine reduzierte Stärke auf, sollte die auf die Förderbandenden aufgelegte Abdeckung, bezogen auf die Laufrichtung des Förderbandes, vorn und hinten in ihrer Stärke verjüngt ausgebildet sein.

Die Abdeckung besteht vorzugsweise aus Elastomer, insbesondere Gummi, Polyurethan oder aus Polyvenylchlorid oder einem Verbund aus Elastomer und Metall. Das Verbundteil weist beispielsweise einen zentralen Gummiabschnitt auf, an den sich in Förderrichtung vorn und hinten metallische Abschnitte anschließen.

Die Abdeckung kann sich sowohl über die gesamte Breite des Förderbandes erstrecken als auch durch einzelne Segmente gebildet sein, die nebeneinander angeordnet sind. Die Ausbildung einzelner Segmente ist insbesondere dann vorgesehen, wenn das Förderband über Rollen mit Muldungszone bewegt wird.

In den Figuren ist die Erfindung anhand diverser Ausführungsformen beispielsweise dargestellt, ohne auf diese beschränkt zu sein. Es stellt dar:
- Figur 1: eine Draufsicht einer Hälfte eines mit einer gelenkigen Verbindung und der erfindungsgemäßen Abdeckung gestalteten Förderbandes im Bereich der beiden Förderbandenden,
- Figur 2: einen Schnitt durch die Verbindung der beiden Enden des Förderbandes sowie der Abdeckung gemäß der Linie II-II in Figur 1,
- Figuren 3 bis 7: unterschiedliche Gestaltungen der Verbindung und der Abdeckung in einem Schnitt gemäß Figur 2.

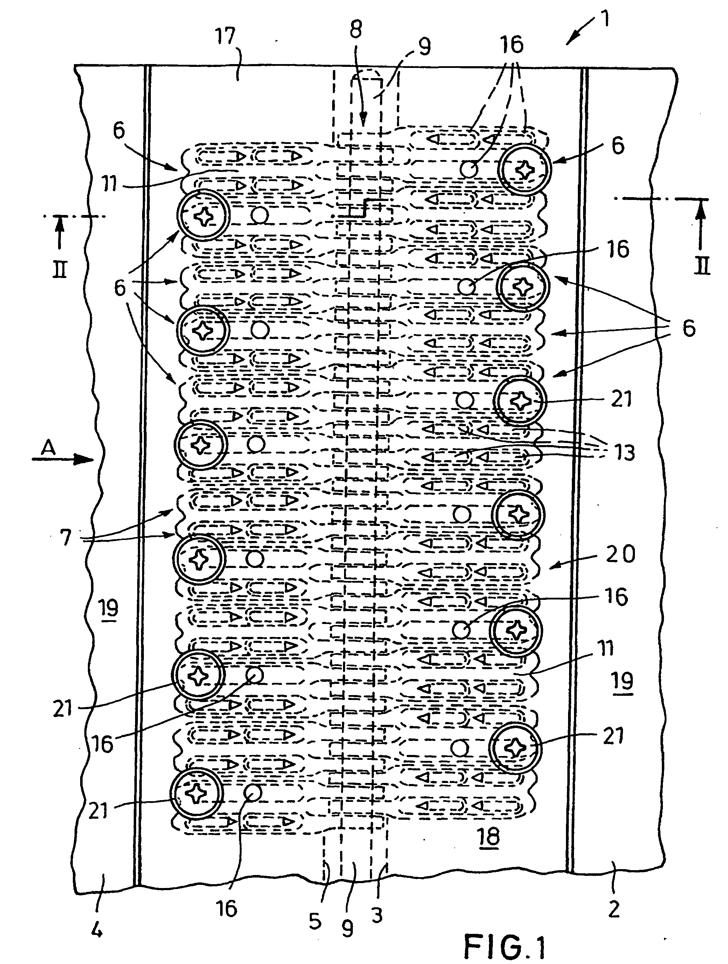

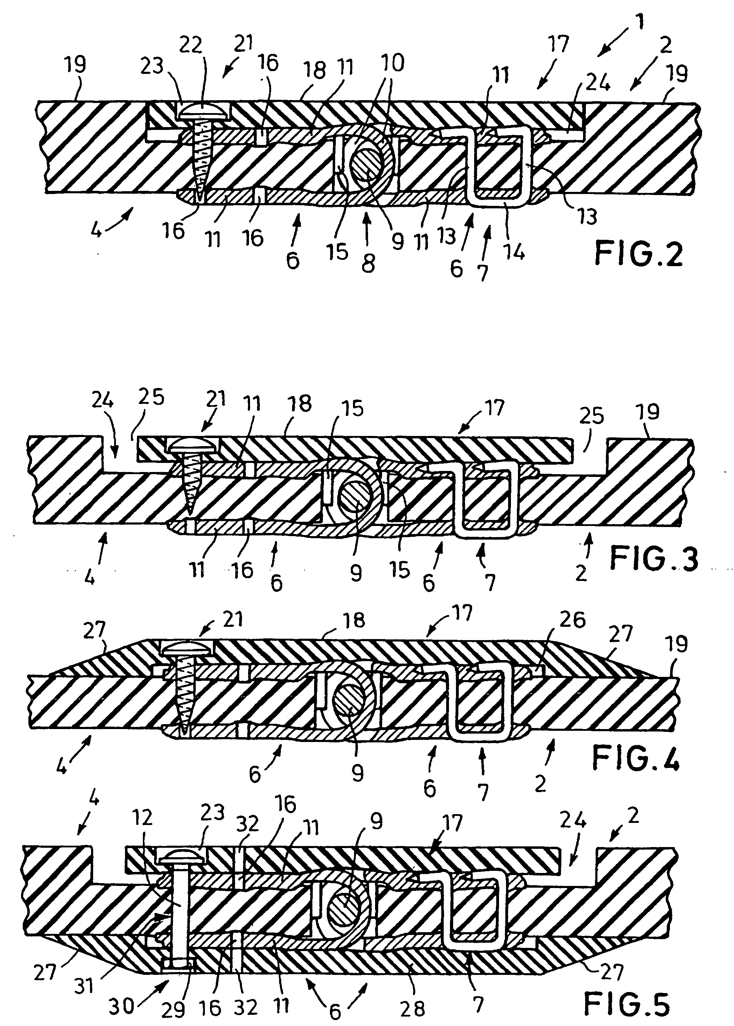

Die Figuren 1 und 2 zeigen die gelenkige Verbindung zweier Enden eines Förderbandes 1. Dieses wird in Richtung des Pfeiles A angetrieben. Der bezogen auf die Laufrichtung A vordere Förderbandabschnitt 2 ist hinten durch die Kante 3, der hintere Förderbandabschnitt 4 durch die vordere Kante 5 begrenzt. Mit den Förderbandabschnitten 2 und 4 sind im Bereich deren vorderen und hinteren Kante 5, 3 eine Vielzahl Verbindungselemente mittels Krampen 7 verbunden, wie es beispielsweise im Stand der Technik nach der DE 42 35 759 A1 geoffenbart ist.

Jedes Verbindungselement 6 weist zur Bildung einer Öse 8 für einen Kupplungstab 9 einen bogenförmigen Ösensteg 10 und zwei Schenkel 11 auf, wobei jeder Schenkel 11 mit vier Löchern 16 zur Aufnahme der Schenkel 13 zweier Krampen 7 versehen ist. Das Förderband 1 ist als einlagiger Textilfördergurt mit einer nicht näher verdeutlichten oberen und unteren Deckplatte aus Gummi ausgebildet. Bei der Ausführungsform gemäß der Figuren 1 und 2 ist die obere Deckplatte im Bereich des jeweiligen Bandendes entfernt, zum Beispiel abgehobelt. In diesem verjüngten Bereich sind die U-förmigen Verbindungselemente 6 auf die Bandenden aufgeschoben und mittels der Krampen 7 mit den Förderbandabschnitten 2 und 4 verbunden. Als Anschlag beim Montieren der Verbindungselemente 6 dienen an diesen angebrachte Vorsprünge 15, die den jeweiligen Förderbandabschnitt 2 bzw. 4 stirnseitig kontaktieren. Die einzelnen Verbindungselemente 6 eines Förderbandabschnittes sind mittels eines nicht näher gezeigten, im Bereich des Vorsprunges 15 angeordneten Stabes, der senkrecht zur Laufrichtung des Bandes orientiert ist, miteinander fixiert, so daß diese Verbindungselemente als Einheit auf den jeweiligen Förderbandabschnitt 2 bzw. 4 aufgesteckt werden können. Der jeweilige Krampen 7 wird von der Seite des Förderbandes 1 in das zugeordnete Verbindungselement 6 eingebracht, das der entfernten Deckplatte abgewandt ist. Die freien Endbereiche der Krampenschenkel 13 werden nach dem Eintreiben der Krampen 7 hinter den zugeordneten Schenkel 11 des Verbindungselementes 6 rechtwinklig abgewinkelt und klemmen damit den jeweiligen Förderbandabschnitt zwischen den Schenkeln 11 des Verbindungselementes 6. Aufgrund der Schnittführung ist in Figur 2 nur der Krampen 7 des in Laufrichtung vorlaufenden Verbindungselementes 6, nicht aber der Krampen des nachlaufenden Verbindungselementes sichtbar. Wie dem linken Bereich der Figur 2 und der Figur 1 zu entnehmen ist, werden nicht alle Löcher 16 in den Verbindungselementen 6 für die Aufnahme der Krampen 7 verwendet, sondern es bleiben bei jedem zweiten Verbindungselement 6 die vier Löcher, die üblicherweise der Aufnahme eines Krampens 7 dienen, frei.

Die Figuren 1 und 2 veranschaulichen, daß im Bereich der entfernten oberen Deckplatte eine plattenförmige, rechteckige Abdeckung 17 eingelegt ist, deren Stärke, bei Auflage auf den Verbindungselementen 6, so bemessen ist, daß sie mit ihrer oberen Fläche 18 eine Flucht mit der oberen Fläche 19 der Förderbandabschnitte 3 und 4 bildet. Die Abmessung der Abdeckung 17 in Förderrichtung des Bandes ist so gewählt, daß sie mit geringem Spiel in den Rücksprung 24 des Förderbandes 1 eingesetzt werden kann. Die Abdeckung 17 kann sich über die gesamte Breite des Förderbandes erstrecken oder aber aus einzelnen Segmenten gebildet sein, die sich nur über einen Teil der Breite des Förderbandes erstrecken und in definiertem Abstand zueinander angeordnet sind, so daß das Band insbesondere durch eine Muldungszone einer Förderrolle bewegt werden kann. Für den in Figur 1 gezeigten Verbinderstreifen 20, der aus zwölf miteinander kämmenden Verbindungselementen 6 besteht, sind zwölf Schrauben 21 vorgesehen, die dem Befestigen der Abdeckung 17 mit den Verbindungselementen 6 dienen. Die Schrauben 21 sind selbstschneidend, so daß sie unmittelbar in die jeweiligen, miteinander fluchtenden Löcher 16 in den Schenkeln 11 der Verbindungselemente 6 eingeschraubt werden können. Für den Schraubenkopf 22 ist eine Versenkung 23 in der Abdeckung 17 vorgesehen. Aufgrund der Schnittführung in Figur 1 zeigt Figur 2 nur für den hinteren Förderbandabschnitt 4 die Verbindung der Abdeckung 17 mit diesem. Die Abdeckung besteht beispielsweise aus Gummi.

Bei der Ausführungsform nach Figur 1 ist aufgrund des Umstandes, daß die jeweilige Schraube 21 beide Schenkel 11 des zugeordneten Verbindungselementes 6 durchsetzt, eine steife Verbindung gegeben, die voraussetzt, daß die Auflage recht elastisch ist, um sich im Betrieb des Förderbandes 1 verformen zu können. Die Ausführungsform nach der Figur 2 unterscheidet sich von derjenigen nach Figur 1 dadurch, daß die jeweilige Schraube 21 nur in den der Abdeckung 17 zugewandten Schenkel 11 des jeweiligen Verbindungselementes 6 eingeschraubt ist, und im Rücksprung 24 des Förderbandes 1, bezogen auf die Laufrichtung des Bandes, vor und hinter der Abdeckung 17 ein ausreichend großer Spalt 25 gebildet ist, so daß in diesem Fall die Abdeckung 17 steifer ausgebildet werden kann.

Die Ausführungsform nach der Figur 4 orientiert sich grundsätzlich an der nach der Figur 2. Allerdings ist die Deckschicht des Förderbandes 1 nicht entfernt, so daß das Band keinen Rücksprung 24 aufweist. Die Abdeckung 17 aus Gummi ist unmittelbar auf die obere Fläche 19 der Förderbandabschnitte 2 und 4 aufgelegt und weist in ihrem zentralen Abschnitt, auf der dem Förderband 1 zugewandten Seite, einen Rücksprung 26 auf, der der Aufnahme der oberen Schenkel 11 der Verbindungselemente 6 dient. Bezogen auf die Laufrichtung ist die Abdeckung 17 vorn und hinten mit einer Schräge 27 versehen, so daß relativ zum Förderband 1 sich bewegendes Fördergut nicht an einer Stoßkante der Abdeckung 17 hängenbleiben kann.

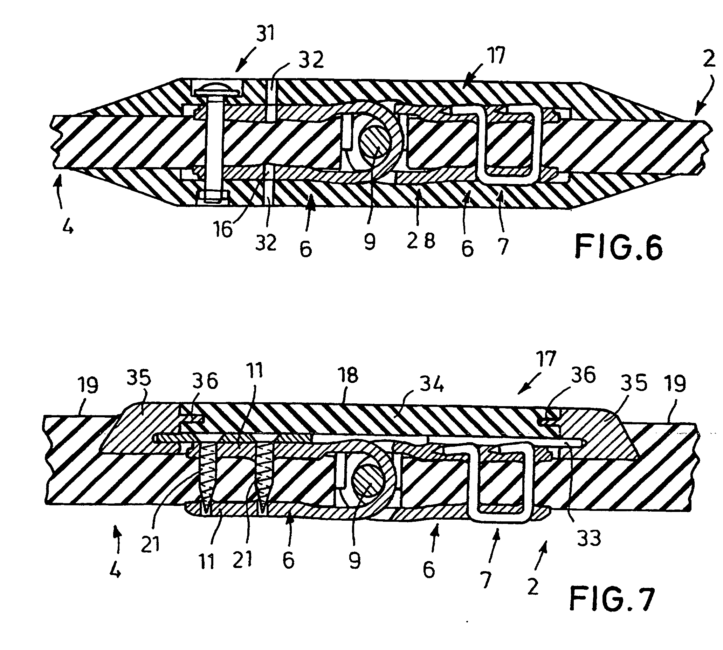

Die Ausführungsform nach Figur 5 unterscheidet sich von derjenigen nach Figur 4 dadurch, daß zum Befestigen der Abdeckung 17 statt Schrauben 21 nunmehr Bolzen-Muttern-Verbindungen 31 vorgesehen sind. Von oben ist in die jeweilige Versenkung 23 ein Bolzen 12 durch das Loch in der Abdeckung 17 und die Löcher 16 in den Schenkeln 11 des zugeordneten Verbindungselementes 6 gesteckt und durchsetzt ein Loch in einer unteren Abdeckung 28, deren Versenkung 29 die Mutter 30 aufnimmt. Bei dieser Ausführungsform findet somit auch eine untere Abdeckung 28 Verwendung, die entsprechend der Abdeckung 17 bei der Ausführungsform nach Figur 4 gestaltet ist und aufgrund der Schrägen 27 sicherstellt, daß das Förderband 1 geräuscharm eine die Unterseite des Förderbandes 1 kontaktierende Umlenkrolle passieren kann. Abgesehen hiervon werden aufgrund der unteren Abdeckung 28 die Umlenkrollen bzw. Laufrollen des Fördersystems geschont, da diese nicht in Kontakt mit den metallischen Verbindungselementen und den zu deren Befestigung Verwendung findenden Mitteln gelangen. Zusätzlich sind die beiden Abdeckungen 17 und 28 mit Löchern 32 versehen, die der vereinfachten Positionierung der Abdeckungen dienen. Hierzu wird ein nicht gezeigter Montagestift durch die miteinander fluchtenden Löcher 32 und 16 gesteckt.

Die Ausführungsform nach der Figur 6 unterscheidet sich von der nach Figur 5 dadurch, daß die obere Abdeckung 17 nicht in einem Rücksprung angeordnet und statt dessen entsprechend der unteren Abdeckung 28 ausgebildet ist.

Die Ausführungsform nach Figur 7 orientiert sich an derjenigen nach Figur 1. Dort dient eine zusätzliche Blechplatte 33 der Halterung der Abdeckung 17, die von der Seite in den in diesem Fall schwalbenschwanzförmig gestalteten Rücksprung 24 eingeschoben wird. Auf die mit den Förderbandabschnitten 2 und 4 befestigten Verbindungselemente 6 wird die Blechplatte 33 aufgelegt, die, bezogen auf die Laufrichtung des Förderbandes, vorn und hinten über die Verbindungselemente 6 vorsteht. Die Blechplatte 33 ist gelocht, wobei pro Verbindungsstelle zwei Schrauben 21, die beide Schenkel 11 des zugeordneten Verbindungselementes 6 durchsetzen, der Befestigung der Blechplatte 33 am Verbindungselement 6 dienen. Die Abdeckung 17 ist als Verbundteil ausgebildet. Sie besteht aus einem zentralen Plattenabschnitt 34 aus Gummi, mit dessen vorderer und hinterer Stirnfläche keilförmige und entsprechend der Schwalbenschwanzform komplementär gestaltete Abschnitte 35 aus Metall verbunden sind, wobei mit den Abschnitten 35 verbundene Stege 36 in Nuten des Plattenabschnittes 34 ragen. Die obere Fläche 18 der Abdeckung 17 ragt geringfügig über die obere Fläche 19 der beiden Förderbandabschnitte 2 und 4.

## Patentansprüche

1. Verbindung zweier Enden (2, 4) eines Förderbandes (1) mit Verbindungselementen (6), die mittels Befestigungselementen (7) mit den Förderbandenden (2, 3) verbunden sind, wobei zumindest auf einer Seite des Förderbandes (1) eine Abdeckung (17) angeordnet ist, die die auf dieser Seite befindlichen Verbindungselemente (6) abdeckt, sowie Haltemittel (21, 31), für die Abdeckung (17; 18) vorgesehen sind, die mit den Verbindungselementen (6) zusammenwirken, wobei das jeweilige Verbindungselement (6) U-förmig ausgebildet ist, und mit unterschiedlichen Förderbandenden (2, 4) verbundene Verbindungselemente (6) im Bereich der U-förmigen Öse (8) mittels eines Kupplungselementes (9) verbunden sind, sowie die Verbindungselemente (6) mittels separaten Befestigungselementen (7) mit den Förderbandenden (2, 3) verbunden sind, **dadurch gekennzeichnet, dass** das jeweilige Haltemittel (21, 31) separat zu den Befestigungselementen (7) mit einem oder beiden Schenkeln (11) des U-förmigen Verbindungselementes verbunden ist und eine feste Verbindung zwischen der Abdeckung (17) und dem jeweiligen Verbindungselement (6) darstellt, wobei die Abdeckung (17) nicht nur die Verbindungselemente (6), sondern auch die Befestigungselemente (7) der Verbindungselemente (6) abdeckt.

2. Verbindung nach Anspruch 1, **dadurch gekennzeichnet, daß** auf der Ober- und Unterseite des Förderbandes (1) eine Abdeckung (17, 28) angeordnet ist, wobei die jeweilige Abdeckung (17, 28) die auf der jeweiligen Seite befindlichen Verbindungselemente (6) und die Befestigungselemente (7) dieser Verbindungselemente (6) abdeckt.

3. Verbindung nach Anspruch 1 oder 2, **dadurch gekennzeichnet, daß** das jeweilige Haltemittel (21, 31) mit dem Verbindungselement (6) verschraubt oder durch dieses gesteckt ist, insbesondere in bzw. durch ein Loch (16) im Schenkel (11) eingeschraubt bzw. durchgesteckt ist.

4. Verbindung nach einem der Ansprüche 1 bis 3, **dadurch gekennzeichnet, daß** die Abdeckung (17) mehrere Ausrichtbohrungen (32) aufweist, die mit Löchern (16) in den Verbindungselementen (6) fluchten.

5. Verbindung nach einem der Ansprüche 1 bis 4, **dadurch gekennzeichnet, daß** das Haltemittel einen Vorsprung aufweist, der in eine Ausnehmung der Abdeckung eingesetzt ist.

6. Verbindung nach einem der Ansprüche 1 bis 5, **dadurch gekennzeichnet, daß** das Haltemittel eine Baueinheit mit dem Verbindungselement bildet.

7. Verbindung nach Anspruch 6, **dadurch gekennzeichnet, daß** das Haltemittel (38) als Ansatz (38), insbesondere plattenförmiger Ansatz ausgebildet ist, der mit dem Schenkel (11) verbunden ist.

8. Verbindung nach einem der Ansprüche 1 bis 7, **dadurch gekennzeichnet, daß** die Enden (2, 4) des Förderbandes (1) eine reduzierte Stärke aufweisen und in dem so gebildeten Rücksprung (24) des Förderbandes (1) die Abdeckung (17) angeordnet ist.

9. Verbindung nach einem der Ansprüche 1 bis 7, **dadurch gekennzeichnet, daß** die Enden (2, 4) des Förderbandes (1) keine reduzierte Stärke aufweisen und die auf die Förderbandenden (2, 4) aufgelegte Abdeckung (17), bezogen auf die Laufrichtung des Förderbandes (1), vorn und hinten in ihrer Stärke verjüngt ausgebildet ist.

10. Verbindung nach einem der Ansprüche 1 bis 9, **dadurch gekennzeichnet, daß** das Förderband (1) als Ein- oder Mehrlagengurt ausgebildet ist, insbesondere als Mehrlagengurt mit aus Gummi bestehender oberer und unterer Deckplatte.

11. Verbindung nach einem der Ansprüche 1 bis 10, **dadurch gekennzeichnet, daß** die Abdeckung (17, 28) aus Elastomer, insbesondere Gummi und Polyurethan oder aus Polyvenylchlorid besteht, oder aus einem Elastomer-Metall-Verbund.

12. Verbindung nach einem der Ansprüche 1 bis 11, **dadurch gekennzeichnet, daß** sich die Abdeckung (17) über die Breite des Förderbandes (1) erstreckt und durch einzelne nebeneinander angeordnete Abdecksegmente gebildet ist.

## Claims

1. Connection of the two ends (2, 4) of a conveyor belt (1) with connecting elements (6) which are connected to the conveyor belt ends (2, 3) by means of fastening elements (7), wherein a covering (17) arranged on at least one side of the conveyor belt (1) covers the connecting elements (6) located on that side, and retaining means (21, 31) for the covering (17; 18) are provided that cooperate with the connecting elements (6), wherein each connecting element (6) is U-shaped, and connecting elements (6) connected to different conveyor belt ends (2, 4) are connected in the region of the U-shaped loop (8) by means of a coupling element (9), and the connecting elements (6) are connected to the conveyor belt ends (2, 3) by means of separate fastening elements (7), **characterized in that** each retaining means (21, 31) is connected, separately from the fastening elements (7), to one or both legs (11) of the U-shaped connecting element and makes a firm connection between the covering (17) and the respective connecting element (6), so that the covering (17) covers not only the connecting elements (6) but also the fastening elements (7) of the connecting elements (6).

2. Connection according to Claim 1, **characterized in that** a covering (17, 28) is arranged on the top and bottom sides of the conveyor belt (1 ), so that each covering (17, 28) covers the connecting elements (6) located on the side concerned and the fastening elements (7) of those connecting elements (6).

3. Connection according to Claim 1 or Claim 2, **characterized in that** each retaining means (21, 31) is screwed to the connecting element (6) or slipped through it, in particular screwed or slipped into or through a hole in the leg (11).

4. Connection according to any one of Claims 1 to 3, **characterized in that** the covering (17) has a plurality of alignment holes (32) registering with holes (16) in the connecting elements (6).

5. Connection according to any one of Claims 1 to 4, **characterized in that** the retaining means has a projection which is inserted into a recess in the covering.

6. Connection according to any one of Claims 1 to 5, **characterized in that** the retaining means and the connection element form a constructional unit.

7. Connection according to Claim 6, **characterized in that** the retaining means (38) is configured as a lug (38), in particular a plate-like lug, joined to the leg (11).

8. Connection according to any one of Claims 1 to 7, **characterized in that** the ends (2, 4) of the conveyor belt (1) have reduced thickness, and the covering (17) is arranged in the recess (24) thus formed in the conveyor belt (1).

9. Connection according to any one of Claims 1 to 7, **characterized in that** the ends (2, 4) of the conveyor belt (1) do not have reduced thickness, and the covering (17) placed over the conveyor belt ends (2, 4) is tapered in its thickness at both front and rear in terms of the running direction of the conveyor belt (1).

10. Connection according to any one of Claims 1 to 9, **characterized in that** the conveyor belt (1) is configured as a one ply or multiple ply belt, in particular as a multiple ply belt with top and bottom outer plies made of rubber.

11. Connection according to any one of Claims 1 to 10, **characterized in that** the covering (17, 28) is made of elastomer, in particular rubber and polyurethane, or of polyvinyl chloride, or of an elastomer-metal composite.

12. Connection according to any one of Claims 1 to 11, **characterized in that** the covering (17) extends over the width of the conveyor belt (1) and is formed by separate covering segments arranged side by side.

## Revendications

1. Jonction de deux extrémités (2, 4) d'une bande transporteuse (1), comprenant des éléments de jonction (6) reliés aux extrémités de la bande transporteuse (2, 3) au moyen d'éléments de fixation (7), un revêtement (17) étant disposé sur au moins un côté de la bande transporteuse (1) afin de recouvrir les éléments de jonction (6) présents sur ce côté, et des moyens de maintien (21, 31) pour le revêtement (17 ; 18) qui coopèrent avec les éléments de jonction (6), chaque élément de jonction (6) étant configuré en forme de U, et les éléments de jonction (6) qui relient différentes extrémités de la bande transporteuse (2, 4) étant reliés dans la zone de l'oeillet en forme de U (8) au moyen d'un élément d'accouplement (9), les éléments de jonction (6) étant également reliés aux extrémités de la bande transporteuse (2, 3) au moyen d'éléments de fixation (7) séparés,
**caractérisée en ce que**
le moyen de maintien (21, 31) respectif est relié séparément des éléments de fixation (7) avec une ou deux branches (11) de l'élément de jonction en forme de U et représente une jonction fixe entre le revêtement (17) et l'élément de jonction (6) respectif, le revêtement (17) recouvrant alors non seulement les éléments de jonction (6) mais également les éléments de fixation (7) des éléments de jonction (6).

2. Jonction selon la revendication 1,
**caractérisée en ce que**
sur le côté supérieur et le côté inférieur de la bande transporteuse (1) est disposé un revêtement (17, 28), chaque revêtement (17, 28) recouvrant les éléments de jonction (6) situés de chaque côté ainsi que les éléments de fixation (7) de ces éléments de jonction (6).

3. Jonction selon la revendication 1 ou 2,
**caractérisée en ce que**
le moyen de maintien respectif (21, 31) est vissé à l'élément de jonction (6) ou est inséré à travers celui-ci, notamment est vissé ou inséré dans ou à travers un trou pratiqué dans la branche (11).

4. Jonction selon l'une des revendications 1 à 3,
**caractérisée en ce que**
le revêtement (17) présente plusieurs alésages d'alignement (32) qui coïncident avec des trous (16) pratiqués dans les éléments de jonction (6).

5. Jonction selon l'une des revendications 1 à 4,
**caractérisée en ce que**
le moyen de maintien présente une saillie introduite dans un évidement du revêtement.

6. Jonction selon l'une des revendications 1 à 5,
**caractérisée en ce que**
le moyen de maintien forme un module avec l'élément de jonction.

7. Jonction selon la revendication 6,
**caractérisée en ce que**
le moyen de maintien (38) est configuré sous la forme d'un prolongement (38), notamment en forme de plate-forme reliée à la branche (11).

8. Jonction selon l'une des revendications 1 à 7,
**caractérisée en ce que**
les extrémités (2, 4) de la bande de transport (1) présentent une épaisseur réduite et le revêtement (17) est disposé dans le renfoncement (24) ainsi formé de la bande transporteuse (1).

9. Jonction selon l'une des revendications 1 à 7,
**caractérisée en ce que**
les extrémités (2, 4) de la bande transporteuse (1) ne présentent aucune épaisseur réduite et le revêtement (17) placé sur les extrémités de la bande transporteuse (2, 4), par rapport à la direction d'avancement de la bande transporteuse (1), est configuré avec une épaisseur réduite à l'avant et à l'arrière.

10. Jonction selon l'une des revendications 1 à 9,
**caractérisée en ce que**
la bande transporteuse (1) est configurée sous forme de courroie à une ou plusieurs couches, notamment sous forme de courroie à plusieurs couches comportant une plaque de recouvrement supérieure et inférieure constituée de caoutchouc.

11. Jonction selon l'une des revendications 1 à 10,
**caractérisée en ce que**
le revêtement (17, 28) se compose d'un élastomère, en particulier de caoutchouc et de polyuréthane ou de PVC (polychlorure de vinyle), ou d'un composé élastomère-métal.

12. Jonction selon l'une des revendications 1 à 11,
**caractérisée en ce que**
le revêtement (17) s'étend sur la largeur de la bande transporteuse (1) et est formé par des segments de revêtement individuels disposés les uns à côté des autres.
